# EUROPÄISCHE PATENTSCHRIFT

(11) **EP 2 780 566 B1**
(45) Veröffentlichungstag und Bekanntmachung des Hinweises auf die Patenterteilung: **08.04.2015**
(21) Anmeldenummer: 12848773.3
(22) Anmeldetag: 16.11.2012
(51) Int. Cl.: F02B 29/04

(54) **VERFAHREN ZUM ABKÜHLEN EINER VERDICHTETEN LADELUFT EINER AUFGELADENEN BRENNKRAFTMASCHINE**
METHOD FOR COOLING COMPRESSED CHARGE AIR OF A TURBOCHARGED INTERNAL COMBUSTION ENGINE
PROCÉDÉ POUR REFROIDIR UN AIR DE SURALIMENTATION COMPRIMÉ D'UN MOTEUR À COMBUSTION INTERNE SURALIMENTÉ

(30) Priorität: 18.11.2011 AT 17142011
(43) Veröffentlichungstag der Anmeldung: 24.09.2014
(73) Patentinhaber: GE Jenbacher GmbH & Co OG, 6200 Jenbach (AT)
(72) Erfinder: GRUBER, Friedrich, A-6283 Hippach (AT)
(74) Vertreter: Torggler, Paul Norbert
(86) Internationale Anmeldenummer: PCT/AT2012/000292
(87) Internationale Veröffentlichungsnummer: WO 2013/071323

(56) Entgegenhaltungen:
- EP-A1- 0 750 106
- EP-A2- 1 111 217
- EP-A2- 1 329 610

## Beschreibung

Die vorliegende Erfindung betrifft ein Verfahren zum Abkühlen einer verdichteten Ladeluft einer aufgeladenen Brennkraftmaschine, wobei die verdichtete Ladeluft ausgehend von einer Verdichtungstemperatur in einer ersten Kühlvorrichtung auf eine erste abgesenkte Temperatur abgekühlt wird und in einer darauf folgenden zweiten Kühlvorrichtung auf eine zweite abgesenkte Temperatur kleiner der ersten abgesenkten Temperatur abgekühlt wird.

Bei aufgeladenen Brennkraftmaschinen ist es vorteilhaft, die den Brennräumen der Brennkraftmaschine zugeführte verdichtete Ladeluft bzw. ein verdichtetes Brennstoff-Luftgemisch zu kühlen. Da kühle Luft eine größere Dichte als wärmere Luft aufweist, kann mit kühler Luft die Füllung der Brennräume und damit die hubraumspezifische Leistung der Brennkraftmaschine erhöht werden. Durch eine möglichst niedrige Eintrittstemperatur der verdichteten Ladeluft bzw. des verdichteten Brennstoff-Luftgemisches kann dadurch das Leistungslimit der Brennkraftmaschine positiv beeinflusst werden. Ein Beispiel einer solchen Brennkraftmaschine wird in dem EP-1111217 gezeigt.

Die Luft- bzw. Gemischkühlung erfolgt derzeit in der Regel zweistufig, wobei in der ersten Stufe die Abkühlung des Gemisches bzw. der Ladluft von ca. 200 °C auf ca. 90 °C erfolgt und in der zweiten Stufe eine weitere Abkühlung auf ca. 50 °C erfolgt. Der Grund für diese Art der Kühlung besteht darin, dass damit ein großer Teil der Gemisch- bzw. Ladeluftwärme in einen Heizkreislauf eingebunden und damit genutzt werden kann und insgesamt nur ein relativ geringer Wärmeanteil in die Umgebung abgeführt werden muss.

Die Gemisch- bzw. Ladelufttemperatur kann damit jedoch nicht unter die Umgebungstemperatur abgesenkt werden. Dies wäre jedoch vorteilhaft zur klopffreien Darstellung sehr hoher Motorleistungen, zur Realisierung sehr hoher Verdichtungsverhältnisse und zur weiteren Absenkung von Stickoxidemissionen. Aufgabe der Erfindung ist es daher, ein gegenüber dem Stand der Technik verbessertes Verfahren zum Abkühlen einer verdichteten Ladeluft in aufgeladenen Brennkraftmaschinen sowie eine entsprechende Brennkraftmaschine anzugeben.

Diese Aufgabe wird erfindungsgemäß durch ein Verfahren mit den Merkmalen des Anspruchs 1 gelöst. Vorteilhafte Ausführungsformen der Erfindung sind in den abhängigen Ansprüchen angegeben.

Gemäß der Erfindung ist also vorgesehen, dass die verdichtete Ladeluft nach der zweiten Kühlvorrichtung in einer dritten Kühlvorrichtung auf eine dritte abgesenkte Temperatur kleiner der zweiten abgesenkten Temperatur abgekühlt wird, wobei die Abkühlung der verdichteten Ladeluft in der dritten Kühlvorrichtung während des Betriebs der Brennkraftmaschine nur zeitweise erfolgt.

Der in diesen Ausführungen verwendete Begriff "Ladeluft" ist nicht als auf Luft eingeschränkt zu betrachten, sondern umfasst auch ein Brennstoff-Luftgemisch.

Durch das Vorsehen von drei getrennten, in Serie geschalteten Ladeluftkühlvorrichtungen bzw. Gemischkühlstufen für drei jeweils verschiedene Kühlkreisläufe kann eine weitere Abkühlung der Ladeluft erzielt werden. Dadurch können einerseits sehr hohe Motorleistungen klopffrei erbracht werden. Andererseits ermöglicht eine weitere Temperaturabsenkung der verdichteten Ladeluft sehr hohe Verdichtungsverhältnisse und weitere Ablenkungen von unerwünschten Stickoxidemissionen. So lassen sich dadurch Verdichtungsverhältnisse von bis zu 15:1 erzielen, was eine deutliche Erhöhung gegenüber den herkömmlichen Verdichtungsverhältnissen von ca. 11:1 bis 12:1 bedeutet.

Es ist vorgesehen, dass die Abkühlung der verdichteten Ladeluft in der dritten Kühlvorrichtung während des Betriebs der Brennkraftmaschine nur zeitweise erfolgt.

Vorzugsweise kann vorgesehen sein, dass während einer Leistungsanforderung der Brennkraftmaschine größer einer vorgebbaren Referenzleistung, vorzugsweise der Nennleistung der Brennkraftmaschine, die dritte Kühlvorrichtung aktiviert wird. Für einen sogenannten Peak-Power-Betrieb kann vorgesehen sein, dass die in Strömungsrichtung letzte bzw. dritte Kühlvorrichtung nur zeitweise aktiv ist, beispielsweise wenn die Brennkraftmaschine eine gegenüber einer vorgebbaren Referenzleistung, beispielsweise Nennlast, überhöhte Leistung an ein über einen Generator mit der Brennkraftmaschine verbundenes Stromnetz abgeben soll. Als Nennlast bzw. Nennleistung kann dabei eine Dauerleistung der Brennkraftmaschine definiert sein, die von der Brennkraftmaschine ohne zeitliche Einschränkungen erbracht werden kann, ohne die Lebensdauer oder die Sicherheit zu beeinträchtigen. Selbstverständlich kann aber auch ein beliebiger Leistungs- oder Lastwert als vorbestimmter Referenzwert festgesetzt werden, ab dessen Überschreiten die dritte Kühlvorrichtung aktiviert wird.

Gemäß einer weiteren vorteilhaften Ausführungsvariante kann vorgesehen sein, dass die Klopffestigkeit eines der Brennkraftmaschine und/oder der Ladeluft zugeführten Treibgases erfasst wird, wobei die dritte Kühlvorrichtung während eines Zeitraums aktiviert wird, in dem die Klopffestigkeit des Treibgases unterhalb eines vorgebbaren Referenzwerts liegt.

Die Klopffestigkeit eines Treibgases wird maßgeblich durch den Anteil an höherwertigen (langkettigen) Kohlenwasserstoffen bestimmt, wobei ein höherer Anteil an diesen zu einer Verringerung der Klopffestigkeit führt. Durch Ermittlung der Gaszusammensetzung, insbesondere des Anteils an höherwertigen Kohlenwasserstoffen, lässt sich die Klopffestigkeit des Treibgases bestimmen. Als gängiges Maß für die Klopffestigkeit eines Treibgases kann die Methanzahl herangezogen werden. Es kann daher vorgesehen sein, dass als Maß für die Klopffestigkeit des Treibgases die Methanzahl des Treibgases erfasst wird.

Eine Abweichung der Methanzahl kann durch Auftreten von Klopfen erkannt werden. Wenn Klopfen plötzlich und nur zeitweise auftritt, kann es mit großer Wahrscheinlichkeit auf eine Verschlechterung der Gasqualität und damit auf eine Verringerung der Methanzahl zurückgeführt werden im Gegensatz zu Verschleißerscheinungen oder Ablagerungen an der Brennkraftmaschine, die zu einer schleichenden Veränderung der Klopfgrenze führen. Ein auftretendes Klopfen der Brennkraftmaschine kann in bekannter Art erfasst werden (z.B. mittels Klopfsensor), und die Klopfgrenze kann als Maß für die Methanzahl herangezogen werden, wobei eine Verringerung der Methanzahl zu einem früheren Erreichen der Klopfgrenze führt. Der vorgebbare Referenzwert für die Methanzahl kann dabei von der Klopfgrenze im Normalbetrieb der Brennkraftmaschine abgeleitet werden und beispielsweise bei der Inbetriebnahme der Brennkraftmaschine ermittelt werden.

Beispielsweise kann es sich bei der Brennkraftmaschine um einen, vorzugsweise stationären, Gasmotor handeln, dessen Ladeluft Erdgas enthält. Mit der vorgeschlagenen Lösung kann nun während Verbraucherspitzen, in denen sowohl der Stromtarif als auch der Gastarif sehr hoch sind, zum Erdgas ein höherer Flüssiggasanteil zudosiert werden oder eine entsprechend hohe Wasserstoffmenge beigemischt werden. Gleichzeitig kann während solcher Verbraucherspitzen die dritte Kühlvorrichtung aktiviert werden, wobei durch die dadurch erfolgte zusätzliche Abkühlung der Ladelufttemperatur ein klopfender Motorbetrieb verhindert und eine maximale Motorleistung gewährleistet werden kann.

Die dritte Kühlvorrichtung kann generell auch aktiviert werden, um Leistungseinbrüche während Phasen hoher Umgebungstemperatur zu vermeiden.

Weiters kann vorgesehen sein, dass die Abkühlung der verdichteten Ladeluft in der dritten Kühlvorrichtung während des Hochfahrens der Brennkraftmaschine erfolgt, um den Hochlauf der Brennkraftmaschine aus dem kalten Zustand zu beschleunigen.

Eine weitere Absenkung der Gemischtemperatur durch die dritte Kühlvorrichtung kann auch dann sinnvoll sein, wenn während Verbraucherspitzen zum Brennstoff der Brennkraftmaschine eine Treibgaskomponente mit geringer Klopffestigkeit zugemischt wird. Durch die weitere Absenkung der Gemischtemperatur können ein klopfender Motorbetrieb verhindert und eine maximale Motorleistung gewährleistet werden.

Besonders vorteilhaft ist jene Ausführungsform der Erfindung, bei der in der ersten Kühlvorrichtung die verdichtete Ladeluft auf eine erste abgesenkte Temperatur von 80 °C bis 110 °C, vorzugsweise 90 °C, abgekühlt wird und in der zweiten Kühlvorrichtung die verdichtete Ladeluft auf eine zweite abgesenkte Temperatur von 40 °C bis 60 °C, vorzugsweise 45 °C bis 55 °C, besonders bevorzugt 50 °C, abgekühlt wird. Besonders günstig ist, wenn vorgesehen ist, dass in der dritten Kühlvorrichtung die verdichtete Ladeluft auf eine dritte abgesenkte Temperatur von 5 °C bis 30 °C, vorzugsweise 20 °C bis 25 °C, abgekühlt wird. Dabei kann in der dritten Kühlvorrichtung ein Kühlmedium mit einer Temperatur im Bereich von -5 °C bis 20 °C, vorzugsweise 10 °C bis 15 °C, verwendet werden.

Generell sind die Temperaturniveaus der Kühlmedien für die einzelnen Kühlvorrichtungen unterschiedlich und können von den Einsatz- bzw. Randbedingungen sowie von den Anforderungen abhängen.

Beispielsweise kann die Wärme aus der ersten Kühlvorrichtung zusammen mit der Wärme aus dem Motorabgas zur Dampfproduktion genutzt werden, beispielsweise für Wasserdampfprozesse, zur Dampfproduktion für industrielle Anwendungen oder zum Betreiben von Dampfturbinen mittels Organic Rankine Cycle (ORC). Für solche Fälle wird die Temperatur des Kühlmediums für die erste Kühlvorrichtung etwa 110 °C bis 120 °C betragen. Weiters kann die Wärme der ersten Kühlvorrichtung in Heizkreisläufe mit hoher Vorlauftemperatur eingebunden werden, z.B. in Heizkreisläufe von Fernwärmenetzen. Hierfür wäre eine Temperatur des Kühlmediums für die erste Kühlvorrichtung von ca. 100 °C bis 110 °C optimal. Generell kann vorgesehen sein, dass in der ersten Kühlvorrichtung jene Wärme aus der verdichteten Ladeluft abgeführt wird, die bei hohem Temperaturniveau genutzt werden kann.

Vorzugsweise kann vorgesehen sein, dass die Abkühlung der verdichteten Ladeluft in der ersten Kühlvorrichtung unter Verwendung eines Kühlmittels eines ersten Kühlkreislaufs der Brennkraftmaschine erfolgt. Die erste Kühlvorrichtung kann einen Luft-Flüssigkeits-Wärmetauscher aufweisen und eine Abkühlung der verdichteten Ladeluft kann in Bezug auf die Temperatur des Kühlmittels bzw. Kühlmediums des ersten Kühlkreislaufs erfolgen. Dabei kann vorgesehen sein, dass durch den ersten Kühlkreislauf auch wenigstens eine Zylinderlaufbüchse und/oder wenigstens ein Zylinderkopf gekühlt wird bzw. werden.

In einer bevorzugten Ausführungsform kann vorgesehen sein, dass die Abkühlung der verdichteten Ladeluft in der zweiten Kühlvorrichtung unter Verwendung von Umgebungsluft erfolgt. Hierfür kann die zweite Kühlvorrichtung einen Luft-Luft-Wärmetauscher aufweisen, wodurch eine Abkühlung der verdichteten Ladeluft in Bezug auf die Umgebungslufttemperatur erfolgen kann. Die Temperatur der verdichteten Ladeluft kann durch Wärmeaustausch mit der Umgebungsluft auf ein Niveau von vorzugsweise 45 °C bis 55 °C abgesenkt werden. Vorzugsweise kann die Brennkraftmaschine mit dieser Ladeluft- bzw. Gemischtemperatur in der überwiegenden Zeit betrieben werden.

Besonders vorteilhaft ist jene Ausführungsform der Erfindung, bei der die Abkühlung der verdichteten Ladeluft in der dritten Kühlvorrichtung unter Verwendung eines von einem ersten Kühlkreislauf und einem zweiten Kühlkreislauf gesonderten, dritten Kühlkreislaufs erfolgt. Es kann also neben einem ersten Kühlkreislauf, mit dessen Kühlmittel bzw. Kühlmedium neben der verdichteten Ladeluft beispielsweise auch Zylinderlaufbüchsen oder Zylinderköpfe gekühlt werden können, und einem zweiten Kühlkreislauf, bei dem als Kühlmedium z.B. Umgebungsluft eingesetzt werden kann, ein davon gesonderter dritter Kühlkreislauf mit einem gesonderten Kühlmedium vorhanden sein, der für eine weitere Abkühlung der verdichteten Ladeluft in der dritten Kühlvorrichtung sorgt.

Zur Abkühlung der Temperatur der verdichteten Ladeluft in der dritten Kühlvorrichtung, welche auch nur kurzfristig und für limitierte Zeit erfolgen kann, ist ein Kühlmedium mit einer entsprechend niedrigen Temperatur erforderlich. Als dafür geeignete Kühlmedien bzw. Kältereservoire können beispielsweise vorgesehen sein:
- Rohwasser (Temperaturniveau ca. 15 °C)
- Chillerkühler über Motorabwärme (Temperaturniveau ca. 0 °C)
- Speicherkälte (z.B. Flüssigluftspeicher, Temperaturniveau ca. 0 °C)
- Kaltwasserspeicher (Kühlung über Kälteanlagen, Temperaturniveau ca. 5 °C)
- Prozesskälte (z.B. bei industriellen Anwendungen)
- Verdampfung eines Kältemittels (CO₂, Ammoniak, etc.)

Vorzugsweise kann vorgesehen sein, dass im dritten Kühlkreislauf als Kühlmedium Wasser aus einem Wasserspeicher verwendet wird, wobei das Wasser im Wasserspeicher gekühlt wird.

Die minimale Temperatur des Kühlmediums für die dritte Kühlvorrichtung sollte allerdings nicht geringer sein als etwa -5 °C, um eine Vereisung der Wärmetauscherflächen in der dritten Kühlvorrichtung zu vermeiden.

Bei einer weiteren Ausführungsvariante kann vorgesehen sein, dass nach der dritten Kühlvorrichtung ein durch die Abkühlung der verdichteten Ladeluft auf die dritte abgesenkte Temperatur anfallendes Kondensat abgeschieden wird. Dadurch kann verhindert werden, dass ein anfallendes Wasserkondensat in die Brennräume der Brennkraftmaschine gelangt und Beschädigungen hervorruft.

Im Folgenden wird der Lösungsvorschlag anhand konkreter Beispiele dargelegt und die sich durch die Erfindung ergebenden wirtschaftlichen Vorteile aufgezeigt. Dabei wird angenommen, dass durch eine weitere Abkühlung der verdichteten Ladeluft bzw. des verdichteten Brennstoff-Luftgemisches in der dritten Kühlvorrichtung von 50 °C auf 20 °C die Leistung des Motors um 20% gesteigert werden kann.

Randbedingung (beispielhaft):
- Motor-Nennleistung (Gemischtemperatur = 50 °C): 1000 kW
- Spitzenlast des Motors (Gemischtemperatur = 20 °C): 1200 kW
- Gemischvolumenstrom bei Spitzenlast: 6520 kg/h
- aus der 3. Kühlvorrichtung abzuführende Wärmeleistung (Abkühlung von 50 °C auf 20 °C): 56 kW

### Fall 1:

Verwendung von Rohwasser (Temperaturniveau ca. 15 °C).
- benötigte Rohwassermenge (Erwärmung in der 3. Kühlvorrichtung: 10 °C, also von 15 °C auf 25 °C): 4,8 m³/h
- Rohwasserkosten: 2 €/m³
- Dauer der Spitzenlast: 2 Bh (Betriebsstunden) pro Tag
- Rohwasserkosten pro Tag für Spitzenlastperiode: 19,2 €
- zusätzliche Stromproduktion während der Spitzenlastperiode: 400 kW
- Rohwasserkosten pro kWh zusätzlicher Stromproduktion: 4,8 €ct/kWh
- (mittlerer) Stromtarif außerhalb Spitzenlast: 8 €ct/kWh
- Stromtarif während der Spitzenlastperiode: 20 €ct/kWh
- zusätzlicher Erlös durch die Motoranlage in der Spitzenlastperiode: ca. 7 €ct/kWh bzw. 28 € in 2 Bh Spitzenlast

Bei einer jährlichen Gesamtdauer der Spitzenlastperioden von (angenommen) 750 Bh ergibt dies einen zusätzlichen Erlös von ca. 10.000 €/Jahr (die jährlichen Rohwasserkosten von 4.800 € sind hier bereits abgezogen).

### Fall 2:

Verwendung von Kaltwasser, das in einem Wasserspeicher durch eine Kälteanlage auf ca. +10 °C gekühlt wird. Dabei ist vorgesehen, dass ein Kühlaggregat außerhalb der Spitzentarifzeiten einem Wasserspeicher Wärme entzieht. In dieser Beispielrechnung läuft das Kälteaggregat 20 Stunden pro Tag und führt in dieser Zeit 125 kWh an Wärmeenergie an die Umgebungsluft ab. Das Kühlaggregat entzieht diese Energiemenge dem Wasserkühlkreislauf (z.B. bei 15 °C) und führt sie an die Umgebungsluft (mit einer Temperatur von z.B. 25 °C) ab. Dem Kühlkreislauf der dritten Gemischkühlstufe steht dadurch eine Vorlauftemperatur von 10 °C zur Verfügung. Inklusive Temperaturspreizung bei den Wärmetauschern muss damit eine Temperaturdifferenz von 40 °C überwunden werden. Die elektrische Leistungsaufnahme für den Kältekompressor des Kühlaggregats beträgt dabei ca. 0,4 kW.
- Energiekosten für die Kälteanlage pro Tag: 0,4 kW x 20 h x 0,06 €/kWh= 0,48 €
- Dauer der Spitzenlast: 2 Bh (Betriebsstunden) pro Tag
- zusätzliche Stromproduktion während der Spitzenlastperiode: 400 kW
- Kosten pro zusätzlicher, während der Spitzenlastperiode produzierten Stromenergie: 0,12 €ct/kWh
- (mittlerer) Stromtarif außerhalb Spitzenlast: 8 €ct/kWh
- Stromtarif während der Spitzenlastperiode: 20 €ct/kWh
- zusätzlicher Erlös durch die Motoranlage in der Spitzenlastperiode: ca. 11 €ct/kWh bzw. 44 € in 2 Bh Spitzenlast

Bei einer jährlichen Gesamtdauer der Spitzenlastperioden von (angenommen) 750 Bh ergibt dies einen zusätzlichen Erlös von 16.000 €/Jahr. Gegenüber Fall 1 ist diese Variante damit noch einmal vorteilhafter. Abgesehen von einem deutlich besseren Erlöspotenzial ist hier auch kein Rohwasserverbrauch gegeben, wobei Rohwasser auch nicht überall verfügbar ist.

Weitere Einzelheiten und Vorteile der vorliegenden Erfindung werden anhand der nachfolgenden Figurenbeschreibung erläutert. Dabei zeigt bzw. zeigen:
- Fig. 1: eine Brennkraftmaschine mit drei Kühlvorrichtungen in einer schematischen Darstellung,
- Fig. 2: eine schematische Detaildarstellung der drei Kühlvorrichtungen gemäß Fig. 1 und
- Fig. 3: eine dritte Kühlvorrichtung mit einem Wasserspeicher in einer schematischen Darstellung.

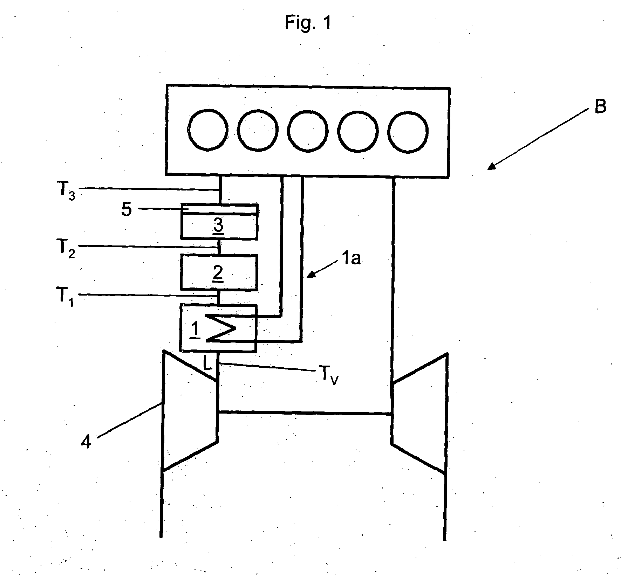

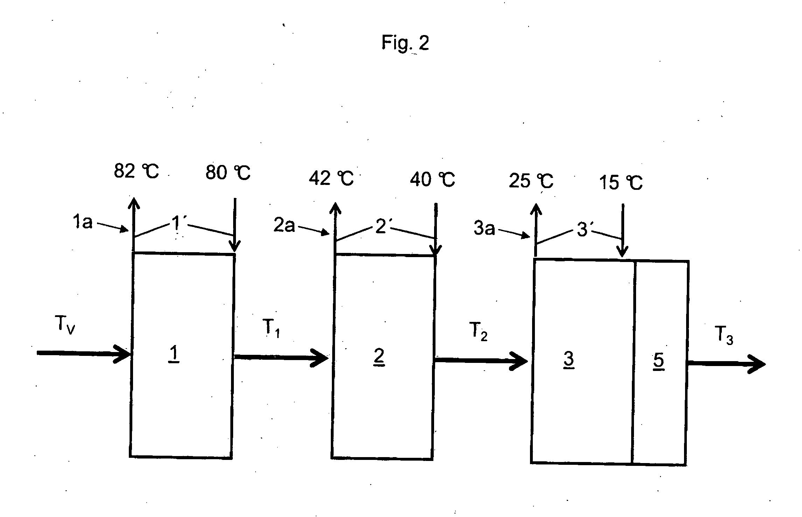

Fig. 1 zeigt in einer schematischen Darstellung eine vorgeschlagene Brennkraftmaschine B mit drei Kühlvorrichtungen 1, 2, 3 und Fig. 2 zeigt eine Detaildarstellung der drei Kühlvorrichtungen 1, 2, 3. Die Brennkraftmaschine B ist in diesem Beispiel ein stationärer, gemischaufgeladener Gasmotor mit einem Ladeluftverdichter 4 zum Verdichten einer der Brennkraftmaschine B zugeführten Frischluft.

Die verdichtete Ladeluft L weist eine Verdichtungstemperatur T_{V} von beispielsweise 230 °C auf und wird durch die erste Kühlvorrichtung 1 der Brennkraftmaschine B durchgeführt. Dabei ist die erste Kühlvorrichtung 1 von einem Kühlmittel 1' eines ersten Kühlkreislaufs 1a der Brennkraftmaschine B durchströmbar. Das Kühlmittel 1' des ersten Kühlkreislaufs 1a kann dabei beispielsweise mit einer Temperatur von 80 °C der ersten Kühlvorrichtung 1 zugeführt werden und nach erfolgtem Wärmeaustausch mit der verdichteten Ladeluft L die erste Kühlvorrichtung 1 beispielsweise mit einer Temperatur von 82 °C wieder verlassen. Vorzugsweise kann dabei auch vorgesehen sein, dass durch den ersten Kühlkreislauf 1a der Brennkraftmaschine B auch wenigstens eine Zylinderlaufbüchse und/oder wenigstens ein Zylinderkopf der Brennkraftmaschine B kühlbar ist bzw. sind. Insgesamt kann durch die erste Kühlvorrichtung 1 beispielsweise die Temperatur der verdichteten Ladeluft L von ihrer Verdichtungstemperatur T_{V} von z.B. 230 °C auf eine erste abgesenkte Temperatur T₁ von z.B. 100 °C abgekühlt werden.

Mit dieser ersten abgesenkten Temperatur T₁ wird die verdichtete Ladeluft L durch die zweite Kühlvorrichtung 2 durchgeführt. Hierbei kann vorzugsweise vorgesehen sein, dass die zweite Kühlvorrichtung 2 von Umgebungsluft durchströmbar ist. Das Kühlmittel bzw. Kühlmedium 2' des zweiten Kühlkreislaufs 2a kann hierbei also Umgebungsluft sein, die beispielsweise mit 40 °C der zweiten Kühlvorrichtung 2 zugeführt wird und nach erfolgtem Wärmeaustausch mit der verdichteten Ladeluft L (z.B. durch Radiatorkühlung) die zweite Kühlvorrichtung 2 mit einer Temperatur von 42 °C wieder verlässt. Durch die zweite Kühlvorrichtung 2 kann die verdichtete Ladeluft L von ihrer ersten abgesenkten Temperatur T₁ nach der ersten Kühlvorrichtung 1 von z.B. 100 °C auf eine zweite abgesenkte Temperatur T₂ von z.B. 50 °C abgekühlt werden.

Mit dieser zweiten abgesenkten Temperatur T₂ strömt die verdichtete Ladeluft L in die dritte Kühlvorrichtung 3. Vorzugsweise kann dabei vorgesehen sein, dass die dritte Kühlvorrichtung 3 einen von einem ersten Kühlkreislauf 1 a und einem zweiten Kühlkreislauf 2a gesonderten, dritten Kühlkreislauf 3a aufweist. Durch die dritte Kühlvorrichtung 3, die auch nur zeitweise aktivierbar sein kann, ist es möglich, die Temperatur der verdichteten Ladeluft L von ihrer zweiten abgesenkten Temperatur T₂ auf eine noch geringere dritte abgesenkte Temperatur T₃ abzukühlen. Als Kühlmedium 3' des dritten Kühlkreislaufs 3a der dritten Kühlvorrichtung 3 kann beispielsweise Rohwasser mit einer Temperatur von ca. 15 °C eingesetzt werden. Nach erfolgtem Wärmeaustausch mit der verdichteten Ladeluft L kann das Rohwasser die dritte Kühlvorrichtung 3 mit einer Temperatur von z.B. 25 °C wieder verlassen. Wenn die dritte Kühlvorrichtung 3 aktiviert ist, kann dadurch beispielsweise die Temperatur der verdichteten Ladeluft L von einer zweiten abgesenkten Temperatur T₂ von z.B. 50 °C auf eine dritte abgesenkte Temperatur T₃ von z.B. 20 °C abgekühlt werden. Mit dieser dritten abgesenkten Temperatur T₃ kann dann die verdichtete Ladeluft L bzw. das verdichtete Brennstoff-Luftgemisch in die Brennräume der Brennkraftmaschine eingebracht werden.

Durch eine nur zeitweise Aktivierung der dritten Kühlvorrichtung 3 können insbesondere Zeiten von Spitzenlastanforderungen wirtschaftlich genützt werden. Der Normalbetrieb der Brennkraftmaschine B außerhalb der Zeiten der Spitzenlast kann ohne aktivierte dritte Kühlvorrichtung 3 erfolgen, um die Betriebskosten der Brennkraftmaschine B in diesen Zeiträumen nicht unnötig zu erhöhen.

Im gezeigten Ausführungsbeispiel ist darüber hinaus noch ein Kondensatabscheider 5 vorgesehen, durch den ein durch die Abkühlung der verdichteten Ladeluft L in der dritten Kühlvorrichtung 3 anfallendes Kondensat abscheidbar ist, sodass dieses Kondensat nicht in die Brennräume der Brennkraftmaschine B gelangen und dort Schaden anrichten kann.

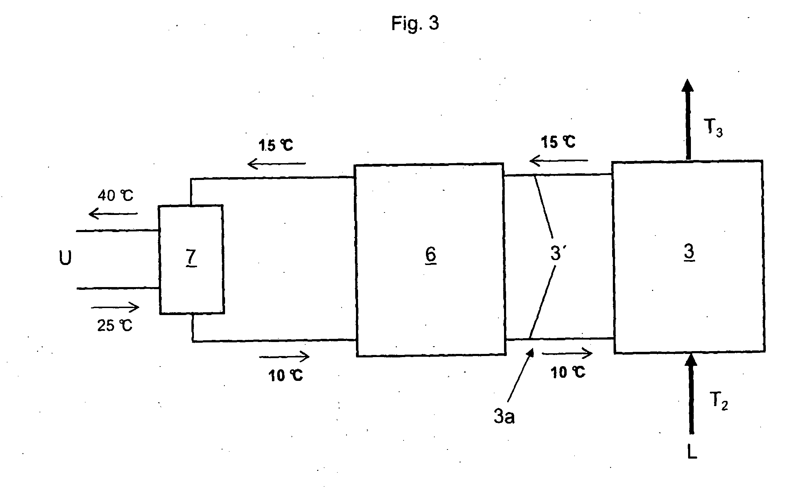

Fig. 3 zeigt ein Beispiel einer dritten Kühlvorrichtung 3. Die dritte Kühlvorrichtung 3 ist mit einem dritten Kühlkreislauf 3a verbunden, in dem als Kühlmedium 3' Wasser aus einem Wasserspeicher 6 zum Einsatz kommt. Um das Kühlmedium 3' entsprechend abzukühlen, steht eine als Kälteaggregat ausgebildete Kühleinrichtung 7 mit dem Wasserspeicher 6 in Verbindung. Beispielsweise beträgt die Temperatur des Kühlmedium 3' aus der dritten Kühlvorrichtung 3 im Rücklauf 15 °C. Das Kälteaggregat 7 kühlt nun das Kühlmedium 3' auf eine Temperatur von 10 °C ab, mit der das Kühlmedium 3' in den Vorlauf der dritten Kühlvorrichtung 3 eingespeist wird, um die verdichtete Ladeluft L auf eine dritte abgesenkte Temperatur T₃ von z.B. 20 °C abzukühlen. Um eine entsprechende Kühlung des Kühlmediums 3' im Wasserspeicher 6 zu erzielen, weist in diesem Fall das Kälteaggregat 7 einen Kältekompressor auf, der die dem Kühlmediums 3' entzogene Wärmeenergie an die Umgebungsluft U abgibt. Dafür wird in diesem Beispiel Umgebungsluft U mit einer Temperatur von 25 °C dem Kälteaggregat 7 zugeführt und nach einem Wärmetausch die Luft mit einer Temperatur von 40 °C an die Umgebung wieder abgegeben.

## Patentansprüche

1. Verfahren zum Abkühlen einer verdichteten Ladeluft (L) einer aufgeladenen Brennkraftmaschine (B), wobei die verdichtete Ladeluft (L) ausgehend von einer Verdichtungstemperatur (T_{V}) in einer ersten Kühlvorrichtung (1) auf eine erste abgesenkte Temperatur (T₁) abgekühlt wird und in einer darauf folgenden zweiten Kühlvorrichtung (2) auf eine zweite abgesenkte Temperatur (T₂) kleiner der ersten abgesenkten Temperatur (T₁) abgekühlt wird, **dadurch gekennzeichnet, dass** die verdichtete Ladeluft (L) nach der zweiten Kühlvorrichtung (2) in einer dritten Kühlvorrichtung (3) auf eine dritte abgesenkte Temperatur (T₃) kleiner der zweiten abgesenkten Temperatur (T₂) abgekühlt wird, wobei die Abkühlung der verdichteten Ladeluft (L) in der dritten Kühlvorrichtung (3) während des Betriebs der Brennkraftmaschine (B) nur zeitweise erfolgt.

2. Verfahren nach Anspruch 1, **dadurch gekennzeichnet, dass** während einer Leistungsanforderung der Brennkraftmaschine (B) größer einer vorgebbaren Referenzleistung, vorzugsweise der Nennleistung der Brennkraftmaschine (B), die dritte Kühlvorrichtung (3) aktiviert wird.

3. Verfahren nach Anspruch 1 oder 2, **dadurch gekennzeichnet, dass** die Klopffestigkeit eines der Brennkraftmaschine (B) und/oder der Ladeluft (L) zugeführten Treibgases erfasst wird, wobei die dritte Kühlvorrichtung (3) während eines Zeitraums aktiviert wird, in dem die Klopffestigkeit des Treibgases unterhalb eines vorgebbaren Referenzwerts liegt.

4. Verfahren nach Anspruch 3, **dadurch gekennzeichnet, dass** als Maß für die Klopffestigkeit des Treibgases die Methanzahl des Treibgases erfasst wird.

5. Verfahren nach einem der Ansprüche 1 bis 4, **dadurch gekennzeichnet, dass** die Abkühlung der verdichteten Ladeluft (L) in der dritten Kühlvorrichtung (3) während des Hochfahrens der Brennkraftmaschine (B) erfolgt.

6. Verfahren nach einem der Ansprüche 1 bis 5, **dadurch gekennzeichnet, dass** die Abkühlung der verdichteten Ladeluft (L) in der ersten Kühlvorrichtung (1) unter Verwendung eines Kühlmittels (1') eines ersten Kühlkreislaufs (1a) der Brennkraftmaschine (B) erfolgt, wobei bevorzugt vorgesehen ist, dass durch den ersten Kühlkreislauf (1 a) auch wenigstens eine Zylinderlaufbüchse und/oder wenigstens ein Zylinderkopf gekühlt wird bzw. werden.

7. Verfahren nach einem der Ansprüche 1 bis 6, **dadurch gekennzeichnet, dass** die Abkühlung der verdichteten Ladeluft (L) in der zweiten Kühlvorrichtung (2) unter Verwendung von Umgebungsluft erfolgt.

8. Verfahren nach einem der Ansprüche 1 bis 7, **dadurch gekennzeichnet, dass** die Abkühlung der verdichteten Ladeluft (L) in der dritten Kühlvorrichtung (3) unter Verwendung eines von einem ersten Kühlkreislauf (1a) und einem zweiten Kühlkreislauf (2a) gesonderten, dritten Kühlkreislaufs (3a) erfolgt.

9. Verfahren nach Anspruch 8, **dadurch gekennzeichnet, dass** im dritten Kühlkreislauf (3a) als Kühlmedium (3') Wasser aus einem Wasserspeicher (6) verwendet wird, wobei das Wasser im Wasserspeicher (6) gekühlt wird.

10. Verfahren nach einem der Ansprüche 1 bis 9, **dadurch gekennzeichnet, dass** nach der dritten Kühlvorrichtung (3) ein durch die Abkühlung der verdichteten Ladeluft (L) auf die dritte abgesenkte Temperatur (T₃) anfallendes Kondensat abgeschieden wird.

11. Verfahren nach einem der Ansprüche 1 bis 10, **dadurch gekennzeichnet, dass** in der ersten Kühlvorrichtung (1) die verdichtete Ladeluft (L) auf eine erste abgesenkte Temperatur (T₁) von 80 °C bis 110 °C, vorzugsweise 90 °C, abgekühlt wird.

12. Verfahren nach einem der Ansprüche 1 bis 11, **dadurch gekennzeichnet, dass** in der zweiten Kühlvorrichtung (2) die verdichtete Ladeluft (L) auf eine zweite abgesenkte Temperatur (T₂) von 40 °C bis 60 °C, vorzugsweise 45 °C bis 55 °C, besonders bevorzugt 50 °C, abgekühlt wird.

13. Verfahren nach einem der Ansprüche 1 bis 12, **dadurch gekennzeichnet, dass** in der dritten Kühlvorrichtung (3) die verdichtete Ladeluft (L) auf eine dritte abgesenkte Temperatur (T₃) von 5 °C bis 30 °C, vorzugsweise 20 °C bis 25 °C, abgekühlt wird.

14. Verfahren nach einem der Ansprüche 1 bis 13, **dadurch gekennzeichnet, dass** in der dritten Kühlvorrichtung (3) ein Kühlmedium (3') mit einer Temperatur im Bereich von -5 °C bis 20 °C, vorzugsweise 10 °C bis 15 °C, verwendet wird.

## Claims

1. A method of cooling a compressed charge air (L) of a forced-induction internal combustion engine (B), wherein starting from a compression temperature (T_{V}) the compressed charge air (L) is cooled in a first cooling device (1) to a first reduced temperature (T₁) and in a subsequent second cooling device (2) is cooled to a second reduced temperature (T₂) lower than the first reduced temperature (T₁), **characterised in that** after the second cooling device (2) the compressed charge air (L) is cooled in a third cooling device (3) to a third reduced temperature (T₃) lower than the second reduced temperature (T₂), wherein cooling of the compressed charge air (L) in the third cooling device (3) is effected only intermittently during operation of the internal combustion engine (B).

2. A method as set forth in claim 1 **characterised in that** during a power demand from the internal combustion engine (B) greater than a predeterminable reference power, preferably the rated power of the internal combustion engine (B), the third cooling device (3) is activated.

3. A method as set forth in claim 1 or claim 2 **characterised in that** the anti-knock property of an engine fuel gas fed to the internal combustion engine (B) and/or to the charge air (L) is detected, wherein the third cooling device (3) is activated during a period in which the anti-knock property of the engine fuel gas lies below a predeterminable reference value.

4. A method as set forth in claim 3 **characterised in that** the methane number of the engine fuel gas is detected as a measurement for the anti-knock property of the engine fuel gas.

5. A method as set forth in one of claims 1 through 4 **characterised in that** cooling of the compressed charge air (L) is effected in the third cooling device (3) during acceleration of the internal combustion engine (B).

6. A method as set forth in one of claims 1 through 5 **characterised in that** cooling of the compressed charge air (L) in the first cooling device (1) is effected using a coolant (1') of a first cooling circuit (1 a) of the internal combustion engine (B), wherein it is preferably provided that at least one cylinder liner and/or at least one cylinder head is or are also cooled by the first cooling circuit (1a).

7. A method as set forth in one of claims 1 through 6 **characterised in that** cooling of the compressed charge air (L) in the second cooling device (2) is effected using ambient air.

8. A method as set forth in one of claims 1 through 7 **characterised in that** cooling of the compressed charge air (L) in the third cooling device (3) is effected using a third cooling circuit (3a) separate from a first cooling circuit (2a) and a second cooling circuit (2a).

9. A method as set forth in claim 8 **characterised in that** water from a water storage means (6) is used in the third cooling circuit (3a) as the cooling medium (3'), wherein the water is cooled in the water storage means (6).

10. A method as set forth in one of claims 1 through 9 **characterised in that** after the third cooling device (3) condensate which occurs by virtue of cooling of the compressed charge air (L) to the third reduced temperature (T₃) is separated off.

11. A method as set forth in one of claims 1 through 10 **characterised in that** the compressed charge air (L) is cooled in the first cooling device (1) to a first reduced temperature (T₁) of between 80°C and 110°C, preferably 90°C.

12. A method as set forth in one of claims 1 through 11 **characterised in that** the compressed charge air (L) is cooled in the second cooling device (2) to a second reduced temperature (T₂) of between 40°C and 60°C, preferably between 45°C and 55°C, particularly preferably 50°C.

13. A method as set forth in one of claims 1 through 12 **characterised in that** the compressed charge air (L) is cooled in the third cooling device (3) to a third reduced temperature (T₃) of between 5°C and 30°C, preferably between 20°C and 25°C.

14. A method as set forth in one of claims 1 through 13 **characterised in that** a cooling medium (3') at a temperature in the region of between -5°C and 20°C, preferably between 10°C and 15°C, is used in the third cooling device (3).

## Revendications

1. Procédé de refroidissement d'un air de suralimentation comprimé (L) d'un moteur à combustion interne suralimenté (B), l'air de suralimentation (L) étant refroidi à partir d'une température de compression (Tᵥ) dans un premier dispositif de refroidissement (1) à une première température abaissée (T₁) et dans un deuxième dispositif de refroidissement suivant (2) à une deuxième température abaissée (T₂) inférieure à la première température abaissée (T₁) ; **caractérisé en ce que** l'air de suralimentation comprimé (L) est refroidi après le deuxième dispositif de refroidissement (2) dans un troisième dispositif de refroidissement (3) à une troisième température abaissée (T₃) inférieure à la deuxième température abaissée (T₂), le refroidissement de l'air de suralimentation comprimé (L) ne se produisant que quelquefois dans le troisième dispositif de refroidissement (3) pendant le fonctionnement du moteur à combustion interne (B).

2. Procédé selon la revendication 1, **caractérisé en ce que** pendant une demande de puissance du moteur à combustion interne (B) supérieure à une puissance de référence, de préférence la puissance nominale du moteur à combustion interne (B), le troisième dispositif de refroidissement (3) est activé.

3. Procédé selon la revendication 1 ou 2, **caractérisé en ce que** la résistance à la détonation d'un gaz combustible amené au moteur à combustion interne (B) et / ou à l'air de suralimentation (L) est détectée, dans lequel le troisième dispositif de refroidissement (3) est activé pendant un intervalle de temps, dans lequel la résistance à la détonation du gaz combustible se situe au-dessous d'une valeur de référence prédéfinie.

4. Procédé selon la revendication 3, **caractérisé en ce que** l'indice de méthane du gaz combustible est détecté comme mesure pour la résistance à la détonation du gaz combustible.

5. Procédé selon l'une des revendications 1 à 4, **caractérisé en ce que** le refroidissement de l'air de suralimentation comprimé (L) se produit dans le troisième dispositif de refroidissement (3) pendant le démarrage du moteur à combustion interne (B).

6. Procédé selon l'une des revendications 1 à 5, **caractérisé en ce que** le refroidissement de l'air de suralimentation comprimé (L) dans le premier dispositif de refroidissement (1) a lieu en utilisant un milieu de refroidissement (1') d'un premier circuit de refroidissement (1 a) du moteur à combustion interne (B), dans lequel il est prévu de préférence que par le premier circuit de refroidissement (1 a) est ou sera aussi refroidi au moins une chemise de cylindre et / ou au moins une culasse de cylindre.

7. Procédé selon l'une des revendications 1 à 6, **caractérisé en ce que** le refroidissement de l'air de suralimentation comprimé (L) se produit dans le deuxième dispositif de refroidissement (2) en utilisant l'air ambiant.

8. Procédé selon l'une des revendications 1 à 7, **caractérisé en ce que** le refroidissement de l'air de suralimentation comprimé (L) se produit dans le troisième dispositif de refroidissement (3) en utilisant un troisième circuit de refroidissement (3a), distinct d'un premier circuit de refroidissement (1a) et d'un deuxième circuit de refroidissement (2a).

9. Procédé selon la revendication 8, **caractérisé en ce que** dans le troisième circuit de refroidissement (3a) de l'eau provenant d'un réservoir d'eau (6) est utilisée comme milieu de refroidissement (3'), l'eau étant refroidie dans le réservoir d'eau (6).

10. Procédé selon l'une des revendications 1 à 9, **caractérisé en ce qu'**après le troisième dispositif de refroidissement (3) est déposé un condensat résultant du refroidissement de l'air de suralimentation comprimé (L) à la troisième température abaissée (T₃).

11. Procédé selon l'une des revendications 1 à 10, **caractérisé en ce que** dans le premier dispositif de refroidissement (1), l'air de suralimentation comprimé (L) est refroidi à une première température abaissée (T₁) de 80°C à 110°C, de préférence 90°C.

12. Procédé selon l'une des revendications 1 à 11, **caractérisé en ce que** dans le deuxième dispositif de refroidissement (2) l'air de suralimentation comprimé (L) est refroidi à une deuxième température abaissée (T₂) de 40°C jusqu'à 60°C, de préférence de 45°C à 55°C, plus particulièrement de préférence 50°C.

13. Procédé selon l'une des revendications 1 à 12, **caractérisé en ce que** dans le troisième dispositif de refroidissement (3), l'air de suralimentation comprimé (L) est refroidi à une troisième température abaissée (T₃) de 5°C à 30°C, de préférence de 20°C à 25°C.

14. Procédé selon l'une des revendications 1 à 13, **caractérisé en ce que** dans le troisième dispositif de refroidissement (3) est utilisé un milieu de refroidissement (3') avec une température située entre -5°C et 20°C, de préférence 10°C et 15°C.
